Europäisches Patentamt

European Patent Office

Office européen des brevets

(19)

(11) Veröffentlichungsnummer: **0 175 912**

**A1**

(12) **EUROPÄISCHE PATENTANMELDUNG**

(21) Anmeldenummer: **85110275.6**

(22) Anmeldetag: **16.08.85**

(51) Int. Cl.⁴: **G 01 L 5/16**
**G 01 L 1/22**

(30) Priorität: **24.08.84 DE 3431202**

(43) Veröffentlichungstag der Anmeldung:
**02.04.86 Patentblatt 86/14**

(84) Benannte Vertragsstaaten:
**AT BE CH DE FR GB IT LI SE**

(71) Anmelder: **Siemens Aktiengesellschaft**
**Berlin und München Wittelsbacherplatz 2**
**D-8000 München 2(DE)**

(72) Erfinder: **Fritz, Harald, Dipl.-Ing. (FH)**
**Hebelstrasse 5**
**D-7517 Waldbronn 3(DE)**

(72) Erfinder: **Wurll, Peter, Dipl.-Ing.**
**Kärcherstrasse 60**
**D-7500 Karlsruhe(DE)**

(54) **Mehrkomponentenkraft- und -momentenmesszelle mit Dehnungsmessstreifen.**

(57) Mehrkomponentenkraft- und -momentenmeßzelle mit zu Halbbrückenschaltungen mit einer Konstantstromquelle (Q1, Q2) in jedem Brückenzweig verschalteten Dehnungsmeßstreifen (R1 ... R8), die auf einer Meßfeder mit definierter Krafteinleitung für Längs- und Querkräfte sowie Momente in Beanspruchungsrichtungen der Meßfeder angeordnet sind. Dabei sind zur vereinfachten Verdrahtung bei Anwendung von nur zwei Stromquellen (Q1, Q2) 2 n+2 (n = 1, 2, 3 ...) Dehnungsmeßstreifen auf zwei jeweils die halbe Anzahl der Dehnungsmeßstreifen (R1 ... R7) bzw. R2 ... R8) und eine Konstantstromquelle (Q1 bzw. Q2) enthaltende, an beiden Enden miteinander verbundene und an Masse liegende Serienschaltungen aufgeteilt. Die Meßspannungen (A, B, C, D) sind zwischen reihenfolgemäßig einander entsprechenden Verbindungspunkten von in beiden Serienschaltungen unmittelbar benachbarten Dehnungsmeßstreifen (R1 ... R8) abgreifbar.

Die Erfindung wird angewandt bei der Robotersteuerung.

FIG 3

0175912

Siemens Aktiengesellschaft          Unser Zeichen

Berlin und München                  VPA 84 P 4440

Mehrkomponentenkraft- und -momentenmeßzelle mit Dehnungsmeßstreifen

Der nicht vorveröffentlichten deutschen Patentanmeldung
P 34 06 059.6, insbesondere deren Ansprüchen 1, 7 und 8,
ist eine Mehrkomponentenkraft- und -momentenmeßzelle mit
zu Halbbrückenschaltungen mit einer Konstantstromquelle
in jedem Brückenzweig verschalteten Dehnungsmeßstreifen
zu entnehmen, die auf einer Meßfeder mit definierter
Krafteinleitung für Längs- und Querkräfte und Momente
bezüglich der Beanspruchungsrichtungen der Meßfeder so
angeordnet und orientiert sind, daß sich ein den Kräften
und Momenten eindeutig zuordenbares Ansprechverhalten
ergibt, wobei eine solche Anzahl von Dehnungsmeßstreifen
vorgesehen ist, daß mit den an den Halbbrücken abgreifbaren Meßspannungen und den normierten Dehnungswirkungen
der auf die jeweils beteiligten Dehnungsmeßstreifen einwirkenden Kräfte bzw. Momente genügend viele Gleichungen
zur Ermittlung aller Kräfte und Momente aufstellbar sind.

In Figur 7 der Patentanmeldung ist eine Schaltungsanordnung beschrieben, in der eine Vielzahl einendig parallelgeschalteter Dehnungsmeßstreifen mit Hilfe eines Schalters und zweier Konstantspannungsquellen in zahlreiche
Halbbrücken aufgeteilt werden kann. Für viele Anwendungszwecke sollten die Meßergebnisse der Halbbrückenschaltungen möglichst gleichzeitig zur Verarbeitung zur Verfügung
stehen. Dies kann mit der bekannten Schaltung nicht erreicht werden oder aber nur mit einem anderen in der Beschreibung der älteren Anmeldung erläuterten Ausführungsbeispiel, bei der für jeden Brückenzweig eine gesonderte
Konstantstromquelle vorgesehen ist.

Li 4 Bz / 21.08.1984

Der Erfindung lag die Aufgabe zugrunde, eine Schaltung anzugeben, die mit nur zwei Konstantstromquellen und mit fester Verdrahtung ohne Umschalter auskommt.

Gemäß der Erfindung wird diese Aufgabe durch die kennzeichnenden Merkmale des Anspruchs 1 gelöst.

Die hohen differentiellen Innenwiderstände der beiden Stromquellen lassen die Ströme in beiden Zweigen aus in Serie geschalteten Dehnungsmeßstreifen immer konstant bleiben, unabhängig von Änderungen einzelner Dehnungsmeßstreifen in den Zweigen. Es gibt also keine Rückwirkung eines der Dehnungsmeßstreifen auf in Reihe damit geschaltete Nachbardehnungsmeßstreifen.

Beide Stromquellen sollten gute Gleichlaufeigenschaften haben, was durch einen symmetrischen Aufbau und eine gute Wärmekopplung erreichbar ist.

Zweckmäßig sind zwei in beiden Serienschaltungen einander entsprechende Dehnungsmeßstreifen bei zwei Paaren auf der gleichen Umfangslinie der Meßfeder um 180° gegeneinander versetzt jeweils axial und senkrecht dazu ausgerichtet angeordnet. Die beiden Dehnungsmeßstreifen eines dritten Paares sind gegenseitig um 180° und um 90° gegenüber dem vorhergehenden Paar versetzt axial ausgerichtet angeordnet. Zwei Dehnungsmeßstreifen eines vierten Paares sind an einer Stelle unter $\pm$ 45° zur Achse orientiert übereinander angeordnet.

Die Erfindung wird anhand von drei Figuren näher erläutert.

Figur 1 zeigt in schematischer Darstellung eine zylindrische Meßfeder mit aufgeklebten Dehnungsmeßstreifen.

Figur 2 stellt eine Abwicklung des Mantels der Meßfeder nach Figur 1 dar.

Figur 3 zeigt die Schaltung der auf der Meßfeder angebrachten Dehnungsmeßstreifen.

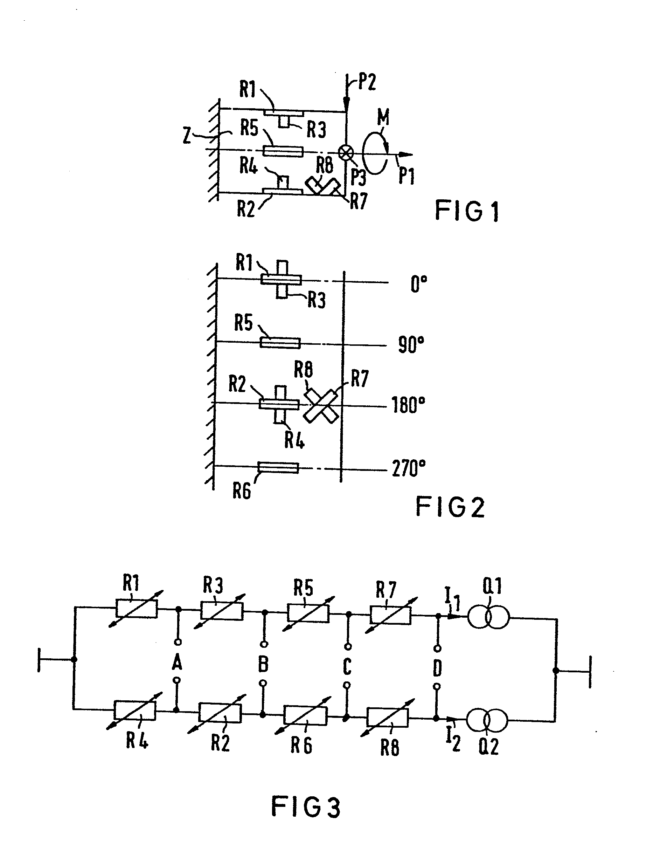

In Figur 1 ist eine linksseitig fest eingespannte zylindrische Meßfeder Z dargestellt, auf der acht Dehnungsmeßstreifen in der aus der Figur ersichtlichen Anordnung aufgeklebt sind. Am freien Ende der Meßfeder Z greifen drei Kräfte P1, P2 und P3 an. P1 wirkt in Achsrichtung der zylindrischen Meßfeder Z als Zugkraft. P2 wirkt als Vertikalkraft, und P3 wirkt als Horizontalkraft in Richtung auf die Zeichenebene. Ein Torsionsmoment M wirkt auf das freie Ende der Meßfeder um die Längsachse in der angegebenen Pfeilrichtung.

Mit Hilfe der Meßfeder können auch Kräfte, die in anderen Richtungen wirken, erfaßt werden. Diese Kräfte werden mit Hilfe der Dehnungsmeßstreifen in ihre Komponenten in den eingezeichneten Vorzugsrichtungen zerlegt.

Figur 2 zeigt eine Abwicklung des Mantels der Meßfeder nach Figur 1 mit den Dehnungsmeßstreifen R1 ... R8. Die Mantellinien der Meßfeder Z, auf denen die Dehnungsmeßstreifen liegen, sind durch ihre Azimutwinkel bezeichnet.

In der folgenden, als Verformungsmatrix bezeichneten Tabelle sind die Gewichte aufgelistet, mit denen die Kräfte und Momente an der Meßfeder in die elektrischen Widerstandsänderungen der Dehnungsmeßstreifen R1 ... R8 eingehen, wenn der Maßstabsfaktor der Dehnungsmeßstreifen und die abmessungs- und materialabhängigen Formänderungseigenschaften der Meßfeder eliminiert sind.

Verformungsmatrix

| DMS | P1 | P2 | P3 | M |
|-----|------|------|----|----|
| R1 | +1 | +1 | 0 | 0 |
| R2 | +1 | -1 | 0 | 0 |
| R3 | -0,3 | -0,3 | 0 | 0 |
| R4 | -0,3 | +0,3 | 0 | 0 |
| R5 | +1 | 0 | +1 | 0 |
| R6 | +1 | 0 | -1 | 0 |
| R7 | +0,5 | -0,5 | 0 | +1 |
| R8 | +0,5 | -0,5 | 0 | -1 |

Wie ersichtlich, sind die Faktoren für in Achsrichtung auf einer gedehnten Faser des Mantels liegende Dehnungsmeßstreifen +1. Der Wert -1 gilt für Dehnungsmeßstreifen, die von der entsprechenden Kraft in axialer Richtung gestaucht werden. Quer zur Achse angeordnete Dehnungsmeßstreifen liefern Signale, die mit dem Gewicht 0,3 entsprechend der Poisson'schen Konstante in die Messung eingehen. Die unter 45° zur Achsrichtung orientierten Dehnungsmeßstreifen R7 und R8 liefern Signale, in denen das Moment M mit 1 und die Kräfte P1 und P2 mit 0,5 gewichtet sind. Die Kraft P3 hat auf die Dehnungsmeßstreifen R7 und R8 nur einen vernachlässigbaren Einfluß. Ebensowenig wirkt das Moment M auf die Dehnungsmeßstreifen R1 ... R6.

Aus Figur 3 ist die Schaltung der Dehnungsmeßstreifen R1 und R8 mit den beiden Konstantstromquellen Q1 und Q2 ersichtlich. In dem von einem Konstantstrom I1 durchflossenen Zweig der Schaltung sind die Dehnungsmeßstreifen R1, R3, R5 und R7 hintereinandergeschaltet. Im zweiten Zweig, der von einem Konstantstrom I2 durchflossen ist, sind die Dehnungsmeßstreifen R4, R2, R6 und R8 hintereinandergeschaltet. Beide Enden der Serienschaltungen sind miteinander verbunden und geerdet.

Zwischen reihenfolgemäßig einander entsprechenden Verbindungspunkten von in beiden Serienschaltungen unmittelbar benachbarten Dehnungsmeßstreifen können Signale A, B, C, D abgegriffen werden, die folgenden Spannungsgleichungen genügen:

$$A = U_{R1} - U_{R4}$$
$$B = A + (U_{R3} - U_{R2})$$
$$C = A + B + (U_{R5} - U_{R6})$$
$$D = A + B + C + (U_{R7} - U_{R8})$$

Für die Meßsignale A, B, C, D gelten auch die unten angeführten symbolischen Gleichungen, die sich aus den vorstehenden Spannungsgleichungen und der Verformungsmatrix ergeben.

$$A \triangleq 1,3 \ P1 + 0,7 \ P2$$
$$B \triangleq A \qquad - 1,3 \ P1 + 0,7 \ P2$$
$$B \triangleq 1,4 \ P2$$
$$A - 0,7 \ P2 \triangleq 1,3 \ P1$$
$$C \triangleq B + 2 \ P3$$
$$C - 1,4 \ P2 \triangleq 2 \ P3$$
$$D \triangleq C + 2 \ M1$$
$$D \triangleq 2 \ P3 + 1,4 \ P2 + 2 \ M1$$
$$D - 1,4 \ P2 - 2 \ P3 \triangleq 2 \ M1$$

Aus diesen Gleichungen sind mit einem Rechner die in die jeweiligen Hauptrichtungen an der Meßfeder einwirkenden Kräfte zu bestimmen. Die Ermittlung dieser Kräfte kann so schnell erfolgen, daß sie zur Steuerung eines Roboters dienen können, der mit der Meßfeder als taktilem Sensor ausgerüstet ist.

2 Patentansprüche
3 Figuren

Patentansprüche

1. Mehrkomponentenkraft- und -momentenmeßzelle mit zu Halbbrückenschaltungen mit einer Konstantstromquelle in jedem Brückenzweig verschalteten Dehnungsmeßstreifen, die auf einer Meßfeder mit definierter Krafteinleitung für Längs- und Querkräfte und Momente bezüglich der Beanspruchungsrichtungen der Meßfeder so angeordnet und orientiert sind, daß sich ein den Kräften und Momenten eindeutig zuordenbares Ansprechverhalten ergibt, wobei eine solche Anzahl von Dehnungsmeßstreifen vorgesehen ist, daß mit den an den Halbbrücken abgreifbaren Meßspannungen und den normierten Dehnungswirkungen der auf die jeweils beteiligten Dehnungsmeßstreifen einwirkenden Kräfte bzw. Momente genügend viele Gleichungen zur Ermittlung aller Kräfte und Momente auf-stellbar sind, d a d u r c h   g e k e n n z e i c h -n e t , daß 2 n+2 (n = 1, 2, 3 ...) Dehnungsmeßstreifen (R1 ... R8) auf zwei jeweils die halbe Anzahl Dehnungsmeßstreifen (R1 ... R7 bzw. R2 ... R8) und eine Konstantstromquelle (Q1 bzw. Q2) enthaltende, an beiden Enden miteinander verbundene und an Masse liegende Serienschaltungen aufgeteilt sind und Meßspannungen (A, B, C, D) zwischen reihenfolgemäßig einander entsprechenden Verbindungspunkten von in beiden Serienschaltungen unmittelbar benachbarten Dehnungsmeßstreifen (R1 ... R8) abgreifbar sind.

2. Mehrkomponentenkraft- und -momentenmeßzelle nach An-spruch 1, d a d u r c h   g e k e n n z e i c h n e t , daß zwei in beiden Serienschaltungen einander entsprechende Dehnungsmeßstreifen (R1, R4 bzw. R3, R2) bei zwei Paaren auf der gleichen Umfangslinie der Meßfeder (Z) um 180° gegeneinander versetzt und, jeweils axial und senkrecht dazu ausgerichtet, die beiden Dehnungsmeßstreifen (R5, R6) eines dritten Paares gegenseitig um 180° und um 90° gegenüber den vorhergehenden Paaren versetzt und axial ausgerichtet und die beiden Dehnungsmeßstreifen (R7, R8) eines vierten Paares an einer Stelle unter ± 45° zur Achse aus-gerichtet übereinander angeordnet sind.

FIG 1

FIG 2

FIG 3

1/1

0175912

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 986 403 (C.J. HURD et al.) <br> * Spalte 5, Zeilen 13-68; Spalte 6, Zeilen 1-29; Figuren 3,5 * <br> --- | 1 | G 01 L 5/16 <br> G 01 L 1/22 |
| A | US-A-3 457 493 (W.E. SHOEMAKER et al.) <br> * Zusammenfassung; Figur 1 * <br> --- | 1 | |
| A | US-A-4 046 005 (R.D. GOROSKI) <br> * Insgesamt * <br> ----- | 1 | |

RECHERCHIERTE
SACHGEBIETE (Int. Cl.4)

G 01 L 5
G 01 L 1

Der vorliegende Recherchenbericht wurde für alle Patentansprüche erstellt

| Recherchenort <br> DEN HAAG | Abschlußdatum der Recherche <br> 13-11-1985 | Prüfer <br> VAN ASSCHE P.O. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82